# EUROPEAN PATENT SPECIFICATION

(11) **EP 1 654 999 B1**
(45) Date of publication and mention of the grant of the patent: **26.09.2012**
(21) Application number: 05380237.7
(22) Date of filing: 27.10.2005
(51) Int. Cl.: A61C 8/00

(54) **Surface treated dental implants**
Oberflächenbehandelte Zahnimplantate
Implants dentaires à surfaces traitées

(30) Priority: 08.11.2004 ES 200402682
(43) Date of publication of application: 10.05.2006
(73) Proprietor: Faus Badia, Vicente Gabriel, 46021 Valencia (ES)
(72) Inventor: Faus Badia, Vicente Gabriel, 46021 Valencia (ES)
(74) Representative: Ungria Lopez, Javier

(56) References cited:
- US-A1- 2004 191 727

## Description

### OBJECT OF THE INVENTION

As expressed in the title of this specification, the present invention refers to some improvements introduced in dental implants, whereby relevant advantages over currently used implants are achieved.

Most dental implants of titanium or of titanium alloys are cylindrical parts that are inserted in the bones of the mouth and afterwards the tooth or teeth are mounted thereon. Dental implants may be screwed on and/or impacted.

All cylindrical implants have a portion that, once fixed, will come in direct contact with the bone surface.

These implants are made, as we have said before, out of titanium or titanium alloys and in all cases they have a polished part called "neck" which is the area that emerges from the bone surface and in which the insertion of the false tooth of the implant will be placed.

### BACKGROUND OF THE INVENTION

Nowadays, the polished surface in dental implants tends to be between 1.5 and 2 mm and as of that in most implants the surface treatment that is going to be later integrated to the bone is applied. The surface treatment tends to be of two different types (one always excludes the other), in such a way that most dental implant manufacturers produce this type of part by the two different manufacturing methods as far as the final surface finish thereof is concerned, which we summarize hereinafter:
- An implant manufactured out of pure titanium or titanium implant parts, which have been subjected to a treatment so that the surface thereof remains "rough" in the final step of the process after having been submerged in acids and having been sanded with different substances. By means of this process, the implant is obtained with a rough surface.
- An implant likewise manufactured out of pure titanium or titanium alloys, to which, instead of subjecting it to the above described process, a hydroxyapatite coating is provided.

From clinical experience, it has been proven that hydroxyapatite implants have a much higher integration index in the bone, as well as a stronger integration than rough implants. On the contrary, once they are already integrated and with the tooth in place they undergo a higher degree of infections (periimplantitis) than rough implants, perhaps due to greater porosity ot hydroxyapatite.

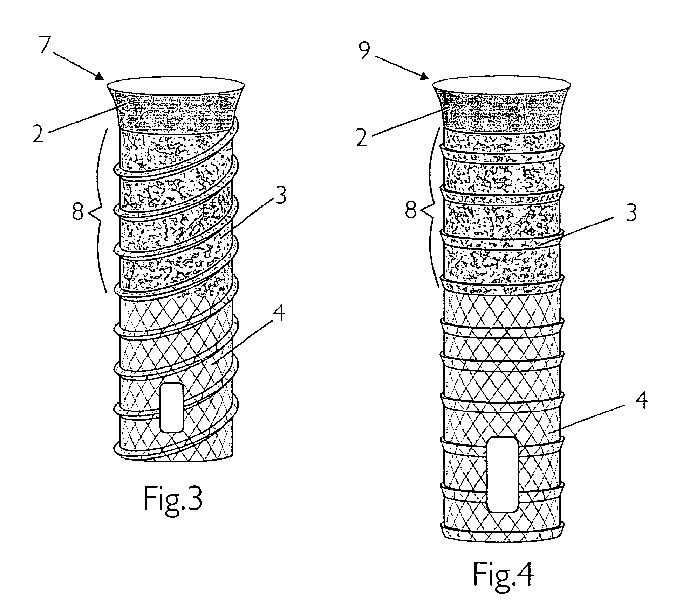

US 2004/ 0191727 (Shelemahy) discloses innovations referred to the treatment applied to the outer surface of the implant's body and to the design of the part of the implant referred to as the polished neck, which protrudes over the gum line. This document teaches an implant wherein the border line of the treated surface follows the contour of the crestal outline of the supporting bone tissue (paragraph 0015, Fig. 4). According to shelemahy this design helps to prevent the recess of said supporting tissue and the loss of crestal bone, conditions that lead to the exposure of a portion of the implant, resulting in an unsatisfactory aesthetic appearance. The design of the polished neck tries to prevent the emergence of black spots between the dental pieces of the dental prosthesis. The device of the present invention differs from this document in that the present invention combines two types of surfaces: the upper part of the implant's body is treated by abradement (sanding or acid etching), while the lower part presents a hydroxyapatite coating.

### DESCRIPTION OF THE INVENTION

In broad outline, the improvements introduced in dental implants, object of the invention, are centered on the details concerning the surface of the implant that will be in contact with the bone for subsequent osseointegration thereof or fixed sitting in the bone itself. In other words, the object of the present invention is a new distribution of the surface of the implant, combining the two above-described techniques. On the other hand and in a first step, the implant is provided with a hydroxyapatite coating but leaving free a first strip of the implant from the neck or polished area, whose variable sizes is 4 mm to 4 mm 2 mm. This strip would then a treated by the described technique for implants with a "rough" finish. Unlike the current technique, the hydroxyapatite coating is not made as of the polished neck that occupies approximately 1.5 to 2 mm.

In this way, a mixed surface of the implant that would provide the advantages of the two described techniques upon being combined in a single part, eliminating in turn the drawbacks that one method as well as the other has, are obtained upon being applied independently. On the one hand, all the advantages that the implants coated only with hydroxyapatite (very high degree of integration in the bone) are achieved. The problems that in many cases appear after implantation thereof in the mouth, such as "periimplantititis" produced since it is in contact with the bone surface of the implant, in other words, the part that is in contact with the mouth, are eliminated. Likewise, the advantages of rough implants that are free of infections although they have a lower degree of integration than hydroxapatite implants.

### BRIEF DESCRIPTION OF THE FIGURES

Figure 1 is a perspective schematic view of a conventional dental implant, which has been subjected to a surface treatment, in order to acquire a "rough" finish.
Figure 2 is a view similar to figure 1, of a conventional implant whose surface has a hydroxyapatite coating.
Figure 3 is a perspective view of a dental implant that includes the improvements object of the invention, being of the scrcw-on type.
Figure 4 is a view similar to that shown in figure 3, of am impacted type dental implant.

### DESCRIPTION OF THE PREFERRED EMBODIMENT

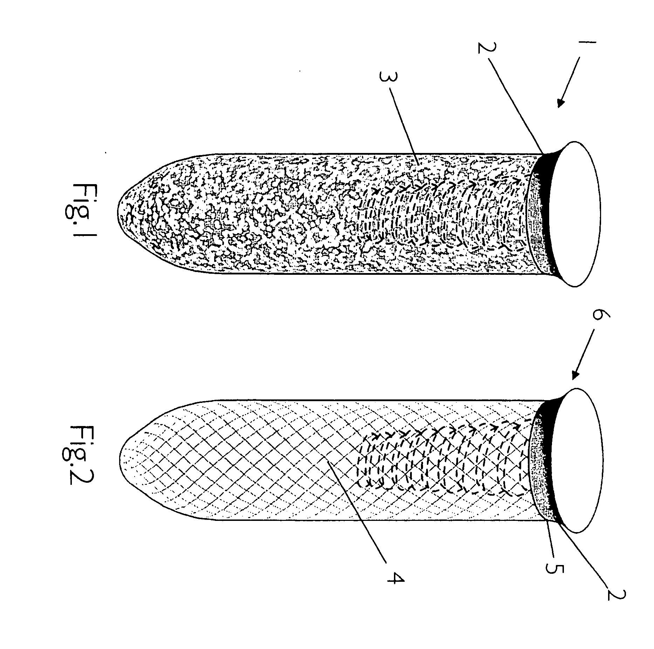

Making reference to the numbering used in the figures and especially in figures 1 and 2 wherein one can see that in the prior art number (1) generally refers to a dental implant made out of pure titanium or titanium alloys, provided with a polished surface or neck (2) which is the area that emerges from the bone surface wherein the implant is located and wherein insertion of the false tooth, not represented in the figures, of the implant will be inserted. The entire surface of the implant that will be in direct contact with the bone surface acquires a "rough" finish (3) upon subjecting it as we have said above, to a bath in acids and have been sanded with different substances.

Figure 2 shows a conventional dental implant that similarly has a polished surface or neck (2) and a remaining surface, irrespective of the length that the implant has, provided with a hydroxyapatite coating, instead of subjecting it in the process described above for its rough finish. The surface coated with hydroxyapatite is referred to as number (4) and the fact that once the tooth has been integrated and placed in the implant coated with hydroxyapatite, the implant coated with hydroxyapatite has a higher degree of infection in the area adjacent to the neck, referred to as number (5), is known. The dental implant of this second type is generally referred to as number (6).

Figure 3 shows a dental implant generally referred to as number (7) and made in accordance with the invention, wherein there is the polished neck (2) that can occupy from 1.5 to 2 mm and then leave a surface space (8) not coated with hydroxyapatite (4). In a second phase, the top area (8) is treated upon subjecting the implant to surface treatment that provides the "rough" appearance (3). The dental implant (7) is a standard screw-on type.

Now making special reference to figure 4, we see a dental implant (9) made in accordance with the invention, of the type of impacted insertion and wherein there is similarly a mixed surface treatment defined by the rough area (8) after the neck (2) and the rest (no matter how long it is) coated with hydroxyapatite (4). The fixing ribs are seen on the surface thererof, unlike the helicoidal rib that the dental implant (7) of figure 3 has.

With this surface form of the dental implant (7) or (9) periimplantitis is prevented since there is the layer of hydroxyapatite and there are the advantages of the rough implants that are free of infections since the area (8) has a rough finish (3).

## Claims

1. Cylindrical dental implant made of titanium or titanium alloys, having a polished area or neck (2) emerging from the implanted and that occupies an area, of around 1.5 to 2 mm, in which neck (2) the false tooth of the implant is adapted to be inserted, and the remaining area has its surface treated, the implant comprises a hydroxyapatite coating (4) leaving a strip or area (8) of the implant of 4 to 4+2 mm free after the polished neck (2), and said strip or area (8) having a rough surface obtained by treatment (3) upon subjecting it to acids and sanding.

## Patentansprüche

1. Zylinderförmiges Zahnimplantat aus Titan oder Titanlegierungen mit einem polierten Bereich oder Hals (2), der nach dem Implantieren aus dem Zahnfleisch heraussteht, und der einen Bereich von ca. 1,5 bis 2 mm einnimmt, und in welchen der falsche Zahn des Implantats eingesetzt werden kann, wobei die Oberfläche des verbleibenden Bereichs behandelt ist, wobei das Implantat eine Beschichtung aus Hydroxylapatit hat und ein Streifen oder Bereich (8) des Implantats von 4 bis 4+2 mm nach dem polierten Hals freigelassen wird, und wobei der Streifen oder Bereich (8) eine raue Oberfläche hat, die durch eine Behandlung (3) mit Säuren und Schleifen erhalten wird.

## Revendications

1. Implant dentaire cylindrique fabriqué en titane ou alliages de titane, ayant une zone polie ou col (2) émergeant de la gencive lorsqu'il est implanté, et qui occupe une zone d'environ 1,5 à 2 mm, la fausse dent de l'implant étant conçue pour être implantée dans ledit col (2) et la zone restante étant traitée en surface, l'implant comprenant un revêtement d'hydroxyapatite (4) laissant une bande ou zone (8) de l'implant de 4 à 4 + 2 mm libre derrière le col poli (2) et ladite bande ou zone (8) ayant une surface rugueuse obtenue par traitement (3) consistant à l'action d'acides et de sablage.
